# FASCICULE DE BREVET EUROPEEN

(11) **EP 4 222 446 B1**
(45) Date de publication et mention de la délivrance du brevet: **16.07.2025**
(21) Numéro de dépôt: 21798082.0
(22) Date de dépôt: 28.09.2021
(51) Int. Cl.: G01B 5/30, G01B 5/14

(54) **SYSTEME DE MESURE D'EVOLUTION DE FISSURE SUR UN MUR OU SIMILAIRE**
SYSTEM ZUR MESSUNG EINES SICH ÄNDERNDEN RISSES IN EINER WAND ODER DERGLEICHEN
SYSTEM FOR MEASURING A CHANGING CRACK IN A WALL OR THE LIKE

(30) Priorité: 30.09.2020 FR 2009980
(43) Date de publication de la demande: 09.08.2023
(73) Titulaire: Feelbat, 97400 Saint-Denis (FR)
(72) Inventeur: HABOT, Jean-Christophe, 97435 SAINT GILLES LES HAUTS (FR)
(74) Mandataire: IP Trust
(86) Numéro de dépôt international: PCT/FR2021/051673
(87) Numéro de publication internationale: WO 2022/069830

(56) Documents cités:
- FR-A1- 2 784 178
- FR-B1- 2 784 178
- RESENSYS: "Wireless Displacement/Crack Meter SenSpot(TM) Sensor", 21 August 2018 (2018-08-21), pages 1 - 2, XP055801650, Retrieved from the Internet <URL:https://www.resensys.com/senspot-displacement.html> [retrieved on 20210505]
- RESENSYS: "SenSpot(TM) Displacement Meter", 23 April 2019 (2019-04-23), pages 1 - 3, XP055801755, Retrieved from the Internet <URL:https://web.archive.org/web/20190423044748if_/http://resensys.com/documents/DisplacementSenSpot.pdf> [retrieved on 20210505]

## Description

### Domaine de l'invention

La présente invention concerne le domaine de la métrologie et plus particulièrement de la mesure et le suivi dans le temps de l'évolution du positionnement relatif de deux parties d'une structure ; notamment pour la surveillance de fissures dans une structure telle qu'un mur d'un bâtiment, c'est-à-dire l'évolution de la distance entre un premier point situé au niveau d'une lèvre de celle-ci et un second point existant au niveau de la lèvre opposée de celle-ci. Ce type de dispositif trouve tout particulièrement son application dans le domaine de la construction. En effet, lorsque des fissures apparaissent sur une construction il peut être très important de connaître l'évolution de la taille de ces fissures et/ou de la déformation du système de façon précise, afin de déterminer la gravité de celles-ci par rapport à la construction elle-même, et donc de définir la réparation la plus appropriée.

Il est courant que des ouvrages et des constructions nécessitent une mise en observation constante ou ponctuelle, car les matériaux de construction évoluent dans le temps, les sols bougent, et les efforts auxquelles est soumis l'ouvrage ou la construction par le vent, les secousses sismiques ou provoquées par des équipements industriels, attentent à la qualité de la construction, à sa sécurité, à son confort. Pour surveiller ces évolutions et éclairer sur les actions à mener pour stabiliser ou sécuriser le bâtiment ou l'ouvrage, il est nécessaire de disposer d'informations factuelles et fiables sur la nature des phénomènes à observer (fissure, déplacement, glissement, inclinaison) et de mesurer dans le temps l'aggravation, la stabilisation et même les cycles d'évolution. Les lectures régulières de ses informations sont reportées sur des graphiques et définiront la tendance du désordre et le type de réparation à envisager.

Pour procéder à de telles surveillances, on a proposé différents types de jauges permettant de mesure l'évolution des fissures, sur un seul axe et dans un seul plan, ou selon différentes directions dans un même plan sur des distances plus ou moins importantes, allant de quelques millimètres à plusieurs décimètres, ou encore l'évolution dans des plans perpendiculaires à la surface, se traduisant par un désaffleurement de murs ou de désarasement des sols ou plafonds ou encore un basculement, ou encore par une évolution de l'inclinaison ou encore des déformations multiaxiales. Généralement, on utilise un type de jauge spécifique pour chacune de ses différents types d'évolution.

### Etat de la technique

On connaît par exemple dans l'état de la technique un dispositif de mesure décrit dans le brevet FR2965612, constitué par un appareil de mesure qui comporte un corps portant un organe de mesure ; par une cible formé par une base pour la fixation sur le mur d'un côté de la fissure et présentant une surface cible de référence s'étendant perpendiculairement au mur lorsque la cible est fixée sur un mur ; et par une platine comportant une base pour la fixation sur le mur de l'autre côté de la fissure. Cette platine porte des moyens de positionnement aptes à coopérer avec des moyens de positionnement homologues du corps de l'appareil de mesure de sorte que lorsque l'appareil de mesure est en place sur la platine, l'organe de mesure puisse coopérer avec la surface cible.

Ce dispositif permet de mesurer l'évolution d'une fissure selon une direction, perpendiculaire à la surface de la surface de référence de la cible, mais pas l'évolution d'un glissement perpendiculaire à la surface du mur, ni selon une direction autre que la perpendiculaire à la surface de référence. De plus, l'interposition de poussières entre la surface de référence et le corps de l'appareil de mesure ou simplement un mauvais positionnement se traduit par des erreurs de mesure.

Le brevet FR2274021 décrit un autre exemple de dispositif pour mesurer l'évolution d'une fissure, caractérisé en ce qu'il comporte deux éléments de mesure, chaque élément étant fixé à une partie respective du mur, de part et d'autre de la fissure, ces deux éléments comportant des moyens de mesure du déplacement relatif d'un élément par rapport à l'autre. Ce dispositif est également limité à une mesure selon un seul axe.

Le brevet GB2246863A décrit une jauge de contrôle des fissures comprenant deux plaques ayant chacune une partie pourvue de marques et une partie de fixation, grâce à quoi les plaques peuvent être fixées sur des parties respectives d'une structure avec les parties avec les marques dans une relation de chevauchement coulissant mutuel, moyennant quoi le mouvement relatif des marquages les uns par rapport aux autres fournit une indication du mouvement relatif des parties de construction, au moins une des parties de fixation étant articulée sur sa partie associée pour se déplacer dans une direction transversale aux parties de plaques se chevauchant coulissantes mutuelles.

Le brevet FR2784178 décrit un dispositif pour mesurer l'évolution de la distance entre un premier point et un second point d'une structure (pouvant notamment être fissurée ou déformée), comprenant un premier élément destiné à être solidarisé audit premier point et un second élément destiné à être solidarisé audit second point, caractérisé en ce qu'il comprend des moyens de mesure du déplacement relatif entre ledit premier élément et ledit second élément dans les trois dimensions. Un bras télescopique pourvue à l'une de ses extrémités d'une rotule sphérique ou d'un cardan montée sur ledit premier élément. Grâce à une telle rotule sphérique, l'extrémité du bras télescopique peut évoluer selon trois degrés de liberté, à savoir deux degrés de liberté définis par la rotule elle-même et un troisième degré de liberté défini par le caractère télescopique du bras. Le bras télescopique peut être remplacé par tout autre système incluant au moins deux éléments longitudinaux montés coulissants l'un par rapport à l'autre, par exemple grâce à une glissière ou un élément équivalent. De telles liaisons sont toutefois mal adaptés à des environnements où la poussière, l'humidité et les changements de température empêchent le bon fonctionnement des rotules et systèmes à glissières

### Inconvénients de l'art antérieur

Les solutions de l'art antérieur présentent différents inconvénients. En premier lieu, il est généralement nécessaire de disposer de plusieurs jauges pour analyser les évolutions selon trois axes, avec une précision élevée.

Pour la solution prévoyant une rotule, il est difficile d'assurer une mesure fiable avec des surfaces conjuguées qui se dégradent avec le temps.

Les jauges de l'état de la technique ne sont pas toutes adaptées à des mesures de delta de mouvement sur de longue distances (supérieures à 5cm).

Les jauges actuelles nécessitent un positionnement très proche de la fissure, positionnement inadapté voir compliqué si le support est altéré aux abord laissant peu d'alternatives de fixation (Enduit altéré, béton désagrégé ou bloc rocheux).

Enfin pour assurer un positionnement satisfaisant, les jauges de l'état de la technique nécessitent plusieurs points de fixation sur le mur à analyser.

Les jauges actuelles sont très visibles et facilement vandalisables par leurs couleurs, leurs fragilité structurelles ou leurs formes saillantes.

### Solution apportée par l'invention

Afin de remédier à ces inconvénients, l'invention concerne selon son acception la plus générale un système de mesure d'évolution de fissure sur un mur ou similaire ou encore une paroi naturelle, par exemple des roches, comportant :
- un appareil de mesure qui comporte un corps portant un instrument de mesure et présentant un premier moyen de positionnement, ainsi qu'un organe mobile comportant un second moyen de positionnement
- au moins deux cibles aptes à coopérer avec un moyen de positionnement caractérisé en ce que :
   - lesdites cibles présentent une forme hémisphérique et en ce que lesdits moyen de positionnement sont constitués par des bagues présentant une section inférieure à la section de la base de ladite cible.

De préférence, l'un desdits moyens de positionnement de l'appareil de mesure présente deux bagues présentant des axes longitudinaux perpendiculaires.

La formes sphérique ou planes et la taille des jauges confères une extrême résistance aux intempéries, aux agression extérieures (UV ou mécanique) et une discrétion sur les supports employés.

Selon une variante, lesdites cibles sont fixées sur le mur par des chevilles à frapper et/ou colle bi-composant époxy.

Selon un mode de réalisation préféré, ledit corps présente une empreinte de forme complémentaire du boîtier d'un vernier numérique (dite règle électronique à capteur capacitif) ou et sur sa face opposée une bague.

Avantageusement, le système comporte en outre un accessoire de calibration constitué par un socle muni de deux dômes hémisphériques dont les axes sont parallèles, un troisième dôme hémisphérique dont l'axe est perpendiculaire aux deux axes précédents.

Selon une variante, le système comporte en outre un accessoire de mesure de l'inclinaison constitué par un socle muni d'un premier dôme hémisphérique fixe (104) et d'un bras supportant un balancier présentant à son extrémité un deuxième dôme hémisphérique fixe.

Selon une variante, le système comporte en outre un accessoire de mesure de cisaillement ou désaffleurement constitué par une embase présentant des rainures arquées dans laquelle viennent s'engager des ergots prévus à l'extrémité frontale d'un corps dont l'extrémité arrière peut recevoir un dôme hémisphérique, ledit corps comportant un bras latéral présentant à son extrémité deux dômes hémisphériques dont les axes de symétrie sont perpendiculaires au plan médian du corps et du bras.

De préférence une partie au moins desdites dômes hémisphériques est striée pour faciliter le démoulage pour les impératifs d'injection des plastiques.

L'invention concerne aussi un appareil de mesure pour mesurer la distance entre deux cibles caractérisé en ce qu'il comporte un corps portant un instrument de mesure présentant un premier moyen de positionnement, ainsi qu'un organe mobile comportant un second moyen de positionnement caractérisé en ce que lesdits moyen de positionnement sont constitués par des bagues.

L'invention concerne également une cible pour la mesure de l'évolution d'une fissure caractérisé en ce qu'elle présente une forme hémisphérique de section supérieure à la section transversale d'une bague de positionnement équipant un appareil de mesure.

### Description détaillée d'un exemple non limitatif de réalisation

La présente invention sera mieux comprise à la lecture de la description qui suit, concernant des exemples non limitatifs de réalisation, illustrés par les dessins annexés où :
- [FIG. 1] La figure 1 représente une vue de dessus du corps de mesure
- [FIG. 2] La figure 2 représente une vue en perspective du corps de mesure et en vue éclatée d'un moyen de positionnement
- [FIG. 3] La figure 3 représente une vue en schématique du corps de mesure et des moyens de positionnement
- [FIG. 4] La figure 4 représente une vue en perspective du prolongement coudée
- [FIG. 5] La figure 5 représente une vue en perspective d'un accessoire pour la mesure d'un cisaillement
- [FIG. 6] La figure 6 représente une vue en perspective d'un accessoire pour la mesure d'évolution par rotation/ basculement
- [FIG. 7] La figure 7 représente une vue en perspective d'un accessoire pour la calibration.

### Principe de fonctionnement

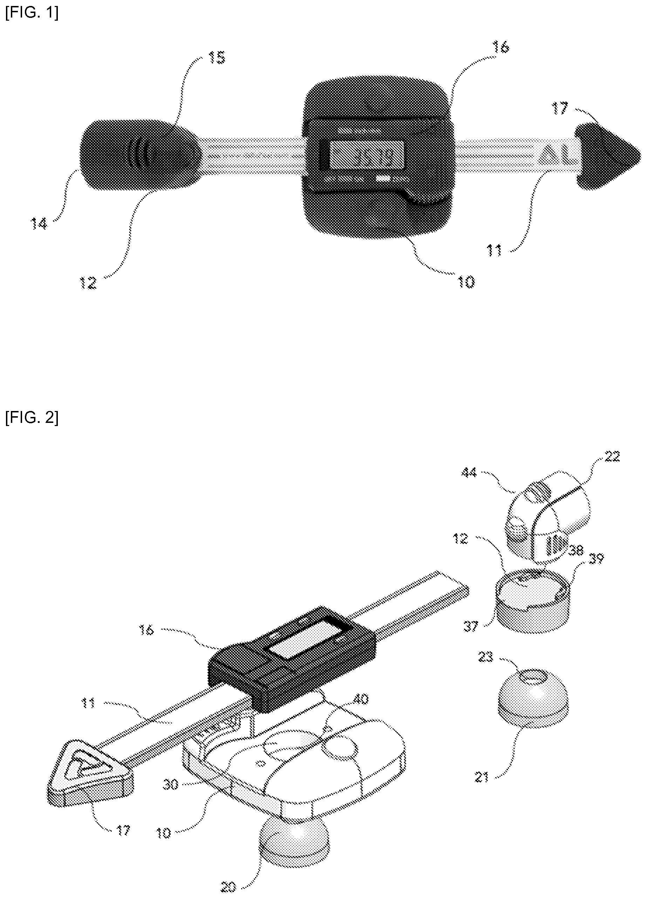

Le dispositif de mesure d'évolution de fissure sur un mur ou similaire, selon l'invention est constitué par un système formé par :
- un appareil de mesure (16) représenté en figure 1
- des plots destinés à être fixés sur le mur, et présentant des cibles hémisphériques (20, 21), présentant différentes configurations pour permettre une adaptation aux différents désordres susceptibles de nécessiter un suivi.

Les cibles (20, 21) présentent une forme hémisphérique ou hémi-elliptiques. Dans le cas d'une forme ellipsoïdale, la hauteur de la protubérante hémisphérique est légèrement supérieure au rayon de la section transversale de la base de la protubérance, par exemple 1,1 fois le rayon. Cette cible hémisphérique (20, 21) peut être traversée par un puit central (23) qui permet de la fixer directement sur un mur avec une cheville à frapper et/ou colle forte bi-composant époxy. Elle peut aussi être fixer sur une base ou prolonger une base d'ancrage.

L'appareil de mesure est constitué par un vernier, par exemple un vernier numérique (16) fixé sur un corps (10) et présentant un pied (11) coulissant par rapport au corps du vernier. La position du pied (11) par rapport au corps (10) détermine l'extension et donc la distance entre deux points mesurés entre deux cibles (20, 21).

Le corps (10) d'une part, et le pied (11) d'autre part, sont munis de moyens de positionnement (10, 12).

Ces moyens de positionnement comportent une bague (30 à 32) définissant une bande périphérique d'appui sur la surface de la cible hémisphérique correspondante (20, 21). Le diamètre des bague (30 à 32) est inférieur au diamètre de la base des cibles hémisphériques (20, 21). Il correspond par égal au diamètre à mi-hauteur des cibles hémisphériques (20, 21).

Cette coopération entre l'arête périphérique (40 à 42) d'une bague (30 à 32) avec la surface d'un dôme hémisphérique (20, 21) assure un positionnement très précis, un auto-centrage et une faible sensibilité par rapport à des poussières.

La bague (40 à 42) peut être constituée par un insert en Nylon (PEEK) (nom commercial) ou par une bague métallique ou en Nylon (PEEK), ou encore en un matériau rigide et lisse surmoulée dans une matière plastique formant la base.

Le vernier numérique (16) est monté sur une platine (10) présentant une empreinte de forme complémentaire au boîtier du vernier (16) pour assurer son calage sans jeu. Cette platine (10) présente une bague (30) dont l'arête (40) périphérique peut venir en appui contre la surface d'un dôme hémisphérique (20 à 22). Son pied (11) présente une extrémité venant s'engager dans une pièce de liaison (12) présentant une échancrure (37) dont la largeur correspond à la largeur du pied (11), et deux protubérances de calage (38, 39) permettant de positionner l'extrémité du pied (11) par rapport à une bague logée dans la partie inférieure de cette platine (12). L'autre extrémité du pied (11) est munie d'une pièce (17) présentant sur l'une des faces latérales un fente s'ouvrant sur un logement permettant d'engager l'extrémité du pied (11).

Ces deux platines (10, 12) constituent les moyens de positionnement du vernis numérique (16) sur des dômes hémisphériques (20 à 22) de manière très précise et fiable, et donc de déterminer la distance entre l'axe longitudinal des bagues positionnées sur ces dômes hémisphériques (20 à 22) de façon répétable.

De préférence, le dispositif de mesure comporte trois bagues (30 à 32) dont deux présentent des axes parallèles, et la troisième un axe perpendiculaire, pour permettre l'utilisation avec des dômes hémisphériques (20, 21) disposés sensiblement dans le même plan, ou encore des dômes décalés pour mesurer le cisaillement entre deux zones (50, 51) de part et d'autre d'une fissure (55).

Les dômes (20 à 22) peuvent être fixés directement sur le mur, ou encore montés sur une embase comportant une platine (35) et un prolongement (36).

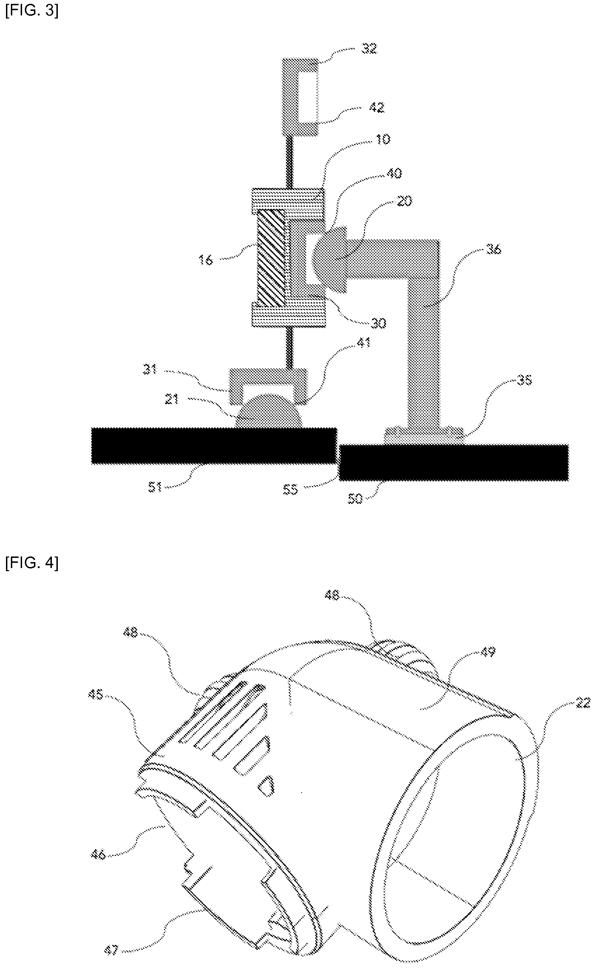

La platine (12) peut recevoir une pièce coudée (44) représentée plus en détail en figure 4. Cette pièce coudée présente une première partie (45) présentant une fente (46) pour le passage de l'extrémité arrière du pied (11), et des épaulements (47) pour l'encliquetage sur la platine (12). Elle est prolongée par une deuxième partie (49) s'étendant selon un axe perpendiculaire à l'axe de la première partie (45). Cette deuxième partie (49) présente une bague (22) pouvant se positionner sur un dôme hémisphérique. Les parties (45, 49) présente des protubérances hémisphériques (48) présentant des fentes facilitant le démoulage dans le cas où la pièce coudée (44) est fabriquée en injection plastique.

### Mesure de l'évolution de la fissure par cisaillement ou désaffleurement

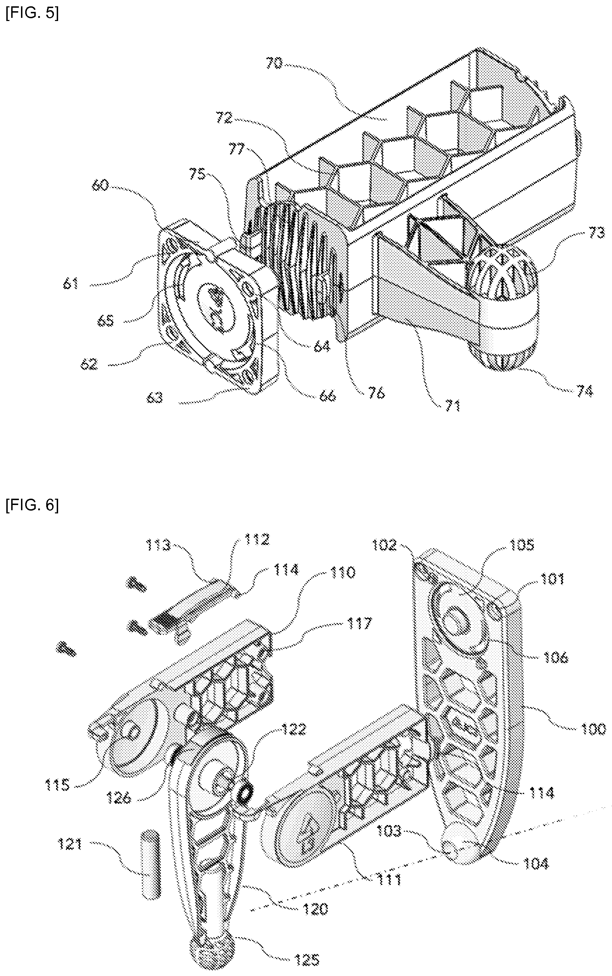

La figure 5 représente une vue en perspective d'un accessoire destiné à la surveillance de déformation en cisaillement ou en désaffleurement. Elle est constituée par une embase (60) présentant des trous (61 à 64) pour le passage de chevilles à frapper destinées à la fixation sur le mur, le plancher ou le plafond. Cette embase (60) présente aussi des rainures arquées (65, 66) dans laquelle viennent s'engager des ergots (75, 76) prévus à l'extrémité frontale d'un corps (70) dont l'extrémité arrière peut recevoir un dôme hémisphérique. Ce corps (70) est réalisé en injection plastique et présente des parois intérieures (72) pour la rigidité, ainsi qu'un bras latéral (71) présentant à son extrémité deux dômes hémisphériques (73, 74) dont les axes de symétrie sont perpendiculaires au plan médian du corps (70) et du bras (71).

La face frontale (77) du corps (70) présente des stries formant une surface hémisphérique complémentaire d'une surface de réception concave prévue sur la face arrière de l'embase (60). Les parties hémisphériques (77) ; 73, 74) sont structurées pour faciliter le démoulage d'une pièce fabriquée par injection plastique.

### Mesure d'évolution par rotation/ basculement

La figure 5 représente une vue en perspective d'un accessoire destiné à la surveillance de déformation par rotation ou basculement. Il est constitué par une sorte pendule, avec une platine (100) destinée à être fixé sur le mur par des chevilles à frapper traversant des trous (101 à 103). La platine (100) comporte un dôme hémisphérique (104) s'étendant perpendiculairement à la surface d'appui de la platine (100) sur le mur.

La platine (100) comporte aussi un socle (105) avec deux rainures (106, 107) arquées pour recevoir un bras formé de deux demi-coques (110, 111) et s'étendant perpendiculairement à la surface d'appui de la platine (100) sur le mur. Ce bras présente à sa face arrière des ergots (114) pour l'encliquetage dans la platine (100). Les deux demi-coques (110, 111) présente un logement (115) pour recevoir l'axe (122) supportant un balancier (120).

Le balancier (120) est constitué par une pièce moulée lestée par une masselotte métallique (121). Il présente à son extrémité inférieure un dôme hémisphérique (125). Au repos, ce balancier (120) s'équilibre en position verticale.

Le vernier permet la mesure entre les deux dômes hémisphériques (104, 125). Pour faciliter la mesure, un frein formé par une lame (112) pourvue de deux pivots latéraux (113, 123) venant s'engager dans des cavités (117) prévus dans les demi-coques (110, 111). La surface inférieure de la lame (112) vient en contact avec la surface supérieure (126) du balancier pour bloquer son basculement afin de permettre la mesure de l'écart entre son dôme (125) et le dôme fixe (104) de la platine (100).

### Accessoire de calibration

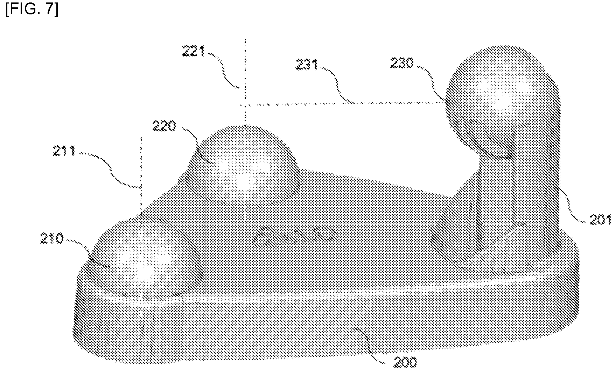

La figure 7 représente une vue en perspective d'un accessoire de calibration de l'appareil de mesure. Il est constitué par un socle (200) présentant une section triangulaire, avec un bras perpendiculaire (201) et trois dômes hémisphériques (210, 220, 230) positionnés à des points de référence. Deux des dômes hémisphériques (210, 220) sont positionnés sur la surface horizontale du socle (200), avec des axes médians (211, 221) parallèles. Le troisième dôme hémisphérique (230) est positionné sur le bras (201) avec un axe médian (231) perpendiculaire aux axes médians (211, 221) des deux autres dômes hémisphériques (210, 220).

La calibration de l'appareil de mesure s'effectue en appuyant les trois bagues (14, 15, 30) contre les trois dômes hémisphériques (210, 220, 230) et en vérifiant que la mesure lue sur le vernier correspond à l'écart de référence des trois dômes hémisphériques (210, 220, 230).

## Revendications

1. - Système de mesure d'évolution de fissure, comportant :
- un appareil de mesure de distance qui comporte un corps (10) portant un instrument de mesure (16) et présentant un premier moyen de positionnement (30), ainsi qu'un organe mobile comportant un second moyen de positionnement (14, 15)
- au moins deux cibles (20, 21, 104, 125) aptes à coopérer avec un moyen de positionnement (14, 15, 30) **caractérisé en ce que** :
- lesdites cibles (20, 21, 104, 125) présentent une forme hémisphérique et **en ce que** lesdits moyen de positionnement sont constitués par des bagues (30, 31, 32) présentant une section inférieure à la section de la base de ladite cible.

2. - Système de mesure d'évolution de fissure selon la revendication 1 **caractérisé en ce que** l'un desdits moyens de positionnement de l'appareil de mesure présente deux bagues (21, 22) présentant des axes longitudinaux perpendiculaires.

3. - Système de mesure d'évolution de fissure selon la revendication 1 **caractérisé en ce que** lesdites cibles (20, 21, 104, 125) sont fixées sur le mur par des chevilles à frapper et/ou colle bi-composant époxy.

4. - Système de mesure d'évolution de fissure selon la revendication 1 **caractérisé en ce que** ledit corps (10) présente une empreinte de forme complémentaire du boîtier d'un vernier numérique et sur sa face opposée une bague (30).

5. - Système de mesure d'évolution de fissure selon la revendication 1 **caractérisé en ce qu'**il comporte en outre un accessoire de calibration constitué par un socle (200) muni de deux dômes hémisphériques (210, 220) dont les axes (211, 221) sont parallèles, un troisième dôme hémisphérique (230) dont l'axe (231) est perpendiculaire aux deux axes (211, 221) précédents.

6. - Système de mesure d'évolution de fissure selon la revendication 1 **caractérisé en ce qu'**il comporte en outre un accessoire de mesure de l'inclinaison constitué par un socle (100) muni d'un premier dôme hémisphérique fixe (104) et d'un bras (110, 110) supportant un balancier (120) présentant à son extrémité un deuxième dôme hémisphérique fixe (125).

7. - Système de mesure d'évolution de fissure selon la revendication 1 **caractérisé en ce qu'**il comporte en outre un accessoire de mesure de cisaillement ou désaffleurement constitué par une embase (60) présentant des rainures arquées (65, 66) dans laquelle viennent s'engager des ergots (75, 76) prévus à l'extrémité frontale d'un corps (70) dont l'extrémité arrière peut recevoir un dôme hémisphérique, ledit corps (70) comportant un bras latéral (71) présentant à son extrémité deux dômes hémisphériques (73, 74) dont les axes de symétrie sont perpendiculaires au plan médian du corps (70) et du bras (71).

8. - Système de mesure d'évolution de fissure selon la revendication 1 **caractérisé en ce qu'**une partie au moins desdites dômes hémisphériques est striée pour faciliter le démoulage.

9. -Système de mesure d'évolution de fissure, selon la revendication 1 **caractérisé en ce que** ledit appareil de mesure comporte un corps (10) portant un instrument de mesure (16) présentant un premier moyen de positionnement (30), ainsi qu'un organe mobile comportant un second moyen de positionnement (14, 15), lesdits moyen de positionnement (14, 15; 30) étant constitués par des bagues (30, 31, 32).

10. -Système de mesure d'évolution de fissure, selon la revendication 1 **caractérisé en ce que** ladite cible pour la mesure de l'évolution d'une fissure présente une forme hémisphérique de section supérieure à la section transversale d'une bague de positionnement équipant un appareil de mesure.

## Patentansprüche

1. System zur Messung der Rissentwicklung, umfassend:
- ein Gerät zur Entfernungsmessung, das einen Körper (10) umfasst, der ein Messinstrument (16) trägt und ein erstes Positionierungsmittel (30) aufweist, sowie ein bewegliches Organ, das ein zweites Positionierungsmittel (14, 15) umfasst
- mindestens zwei Ziele (20, 21, 104, 125), die geeignet sind, mit einem Positionierungsmittel (14, 15, 30) zusammenzuwirken, **dadurch gekennzeichnet, dass**:
- die Ziele (20, 21, 104, 125) eine halbkugelförmige Form aufweisen und dass die Positionierungsmittel aus Ringen (30, 31, 32) bestehen, die einen Querschnitt aufweisen, der kleiner ist als der Querschnitt der Basis des Ziels.

2. System zur Messung der Rissentwicklung nach Anspruch 1, **dadurch gekennzeichnet, dass** eines der Mittel zur Positionierung des Messgeräts zwei Ringe (21, 22) mit senkrechten Längsachsen umfasst.

3. System zur Messung der Rissentwicklung nach Anspruch 1, **dadurch gekennzeichnet, dass** die Ziele (20, 21, 104, 125) durch Schlagdübel und/oder Zweikomponenten-Epoxidkleber an der Wand befestigt sind.

4. System zur Messung der Rissentwicklung nach Anspruch 1, **dadurch gekennzeichnet, dass** der Körper (10) einen Abdruck mit einer Form aufweist, die komplementär zum Gehäuse eines digitalen Nonius ist, und auf seiner gegenüberliegenden Seite einen Ring (30) aufweist.

5. System zur Messung der Rissentwicklung nach Anspruch 1, **dadurch gekennzeichnet, dass** es außerdem ein Kalibrierungszubehör umfasst, das aus einem Sockel (200) besteht, der mit zwei halbkugelförmigen Kuppeln (210, 220) versehen ist, deren Achsen (211, 221) parallel sind, einer dritten halbkugelförmigen Kuppel (230), deren Achse (231) senkrecht zu den beiden vorhergehenden Achsen (211, 221) steht.

6. System zur Messung der Rissentwicklung nach Anspruch 1, **dadurch gekennzeichnet, dass** es außerdem ein Zubehör zur Messung der Neigung umfasst, das aus einem Sockel (100) besteht, der mit einer ersten festen halbkugelförmigen Kuppel (104) und einem Arm (110, 110) versehen ist, der ein Pendel (120) trägt, das an seinem Ende eine zweite feste halbkugelförmige Kuppel (125) aufweist.

7. System zur Messung der Rissentwicklung nach Anspruch 1, **dadurch gekennzeichnet, dass** es außerdem ein Zubehör zur Messung von Scherung oder Denivellierung umfasst, das aus einem Sockel (60) besteht, der bogenförmige Rillen (65, 66) aufweist, in die Vorsprünge (75, 76) eingreifen, die am vorderen Ende eines Körpers (70) vorgesehen sind, dessen hinteres Ende eine halbkugelförmige Kuppel aufnehmen kann, wobei der Körper (70) einen Seitenarm (71) aufweist, der an seinem Ende zwei halbkugelförmige Kuppeln (73, 74) aufweist, deren Symmetrieachsen senkrecht zur Mittelebene des Körpers (70) und des Arms (71) stehen.

8. System zur Messung der Rissentwicklung nach Anspruch 1, **dadurch gekennzeichnet, dass** mindestens ein Teil der halbkugelförmigen Kuppeln geriffelt ist, um die Entformung zu erleichtern.

9. System zur Messung der Rissentwicklung nach Anspruch 1, **dadurch gekennzeichnet, dass** das Messgerät einen Körper (10) umfasst, der ein Messinstrument (16) trägt, das ein erstes Positionierungsmittel (30) aufweist, sowie ein bewegliches Organ, das ein zweites Positionierungsmittel (14, 15) umfasst, wobei die Positionierungsmittel (14, 15; 30) durch Ringe (30, 31, 32) gebildet werden.

10. System zur Messung der Rissentwicklung nach Anspruch 1, **dadurch gekennzeichnet, dass** das Ziel für die Messung der Entwicklung eines Risses eine halbkugelförmige Form aufweist, deren Querschnitt größer ist als der Querschnitt eines Positionierungsrings, mit dem ein Messgerät ausgestattet ist.

## Claims

1. A system for measuring a change in a crack, including:
- a distance measurement device that includes a body (10) bearing a measurement
instrument (16) and having a first positioning means (30), and a movable member including a second positioning means (14, 15)
- at least two targets (20, 21, 104, 125) that are able to cooperate with a positioning means (14, 15, 30), **characterized in that**:
- said targets (20, 21, 104, 125) are hemispherical in shape and **in that** said positioning means consist of rings (30, 31, 32) having a cross section that is smaller than the cross section of the base of said target.

2. The system for measuring a change in a crack as claimed in claim 1, **characterized in that** one of said positioning means of the measurement device has two rings (21, 22) whose longitudinal axes are perpendicular.

3. The system for measuring a change in a crack according to claim 1, **characterized in that** said targets (20, 21, 104, 125) are attached to the wall by drop- in anchors and/or two-part epoxy adhesive.

4. The system for measuring a change in a crack according to claim 1, **characterized in that** said body (10) has a cavity of complementary shape to the housing of a digital vernier and a ring (30) on its opposite face.

5. The system for measuring a change in a crack according to claim 1, **characterized in that** it further includes a calibration accessory consisting of a base (200) equipped with two hemispherical domes (210, 220) whose axes (211, 221) are parallel, and a third hemispherical dome (230) whose axis (231) is perpendicular to the preceding two axes (211, 221).

6. The system for measuring a change in a crack according to claim 1, **characterized in that** it further includes an inclination-measuring accessory consisting of a base (100) equipped with a first fixed hemispherical dome (104) and an arm (110, 110) bearing a pendulum (120) that has a second fixed hemispherical dome (125) at the end thereof.

7. The system for measuring a change in a crack according to claim 1, **characterized in that** it further includes an accessory for measuring shear or misalignment consisting of a base (60) that has curved grooves (65, 66) into which are fitted tabs (75, 76) provided at the front end of a body (70), the rear end of which can accommodate a hemispherical dome, said body (70) including a lateral arm (71) that has at the end thereof two hemispherical domes (73, 74) whose axes of symmetry are perpendicular to the mid-plane of the body (70) and of the arm (71).

8. The system for measuring a change in a crack according to claim 1, **characterized in that** at least part of said hemispherical domes is striated in order to facilitate demolding.

9. The system for measuring a change in a crack according to claim 1, **characterized in that** said measurement device includes a body (10) bearing a measurement instrument (16) having a first positioning means (30), as well as a movable member including a second positioning means (14, 15), said positioning means (14, 15; 30) consisting of rings (30, 31, 32).

10. The system for measuring a change in a crack according to claim 1, **characterized in that** said target for measuring the change in a crack is hemispherical in shape with a cross section that is larger than the cross section of a positioning ring equipping a measurement device
